Europäisches Patentamt

European Patent Office

Office européen des brevets

(11) Veröffentlichungsnummer: **0 046 204**
**B1**

## (12) EUROPÄISCHE PATENTSCHRIFT

(45) Veröffentlichungstag der Patentschrift: **29.07.87**

(21) Anmeldenummer: **81105761.1**

(22) Anmeldetag: **22.07.81**

(51) Int. Cl.⁴: **B 29 C 67/14**

(54) **Verbundwerkstoff-Profil.**

(30) Priorität: **14.08.80 DE 3030699**

(43) Veröffentlichungstag der Anmeldung:
**24.02.82 Patentblatt 82/08**

(45) Bekanntmachung des Hinweises auf die
Patenterteilung:
**29.07.87 Patentblatt 87/31**

(84) Benannte Vertragsstaaten:
**AT FR GB IT**

(56) Entgegenhaltungen:
**FR-A-2 237 761**
**US-A-2 878 020**
**US-A-4 022 864**
**US-A-4 128 963**
**US-A-4 194 738**
**US-A-4 212 461**

(73) Patentinhaber: **Esper, Friedrich, Dr.**
**Römerstrasse 196**
**D-7250 Leonberg (DE)**
(73) Patentinhaber: **Gohl, Walter, Dr.**
**Kniebisstrasse 26**
**D-7031 Aidlingen (DE)**

(72) Erfinder: **Esper, Friedrich, Dr.**
**Römerstrasse 196**
**D-7250 Leonberg (DE)**
Erfinder: **Gohl, Walter, Dr.**
**Kniebisstrasse 26**
**D-7031 Aidlingen (DE)**

Courier Press, Leamington Spa, England.

## Beschreibung

Die Erfindung geht aus von einem Verbundwerkstoff-Profil nach der Gattung des Hauptanspruchs. Ein derartiges Verbundwerkstoffprofil ist aus der US—A—4 128 963 bekannt. Unter Verbundwerkstoffen im weiteren Sinne werden dabei miteinander durch Kleben verbundene Werkstoffe, die auch als sogenannte Schichtstoffe bezeichnet werden können, verstanden. Schichtstoffe und Schichtpreßstoffe sind geschichtete Stoffe, die z.B. aus aufeinander geschichteten Papier-Gewebebahnen, Holzfurniere, Glasmatten, Glasvliesen oder dergleichen mit Kunstharz als Bindemittel bestehen und durch Anwendung von Druck und Hitze zu einem einheitlich, mechanisch festen Material verbunden sein können.

Es ist bekannt, aus derartigen Schichtpreßstoffen Profile und Halbzeuge für verschiedene Anwendungsbereiche herzustellen. In der Sportartikelbranche werden z.B. derartige Profile zur Herstellung von Sportgeräten, wie z.B. Tennisschläger, Badmintonschläger, Squashschläger oder dergleichen, oder auch als Verstrebungen oder Versteifungen, tragende Profile usw. in Booten, Surfbrettern, Segelflugzeugen oder dergleichen verwendet. Je nach Anwendungsfall kann dem in Schichtpreßstoff-Bauweise hergestellten Profil eine andere Formgebung gegeben werden, um gewisse Kräfte und Biegemomente aufzunehmen. Hierbei werden insbesondere in der Sportartikelbranche besondere Anforderungen an die mechanische Festigkeit, Gewichtsverhältnisse, Dämpfungseigenschaften oder dergleichen gestellt.

Bei der Herstellung von Tennisschlägern ist es z.B. bekannt, Glasfasergewebe mittels Epoxidharz in Schichtpreßstoff-Bauweise zu verbinden. Bei der Herstellung von dreidimensionalen Profilen bereitet die Verwendung von Glasfasergeweben Schwierigkeiten, da das Gewebe nur begrenzt gewissen Formgebungen unbeschädigt nachgibt.

Bekannt ist ferner die Herstellung von Hohlprofilen bzw. Hohlkörpern, bei der auf einen Folienoder Gummischlauch die harzimprägnierten Faserlagen aufgewickelt werden, der bewickelte Schlauch in die Form eingelegt und dann zur Formgebung aufgeblasen wird. Der Schlauch wird aus dem fertigen Teil z.T. wieder entfernt. Eine Abwandlung dieses Verfahrens ist die in US—A—4 128 963 beschriebene Technik, den zur Formgebung des Profils notwendigen Innendruck durch einen expandierenden Schaumkern zu erzeugen. Dieser Schaumkern verbindet sich dabei fest mit dem aus Gazelagen und C-Faserschichten aufgebauten Mantel. Ein Nachteil dieser Techniken ist, daß sich lokale Wandstärkeunterschiede ergeben, die sich insbesondere bei leichten Profilen, d.h. Profilen mit dünner Wand als Schwachstellen erweisen.

Bei mechanischer Beanspruchung tritt bei diesen Profilen, insbesondere bei Beanspruchung auf Druck und Biegung, frühzeitig Einbeulen auf. Die Biegefestigkeit solcher Profile ist stark abhängig von ihrem Aufbau und eine vom Aufbau abhängige Gewichtsgrenze kann nicht unterschritten werden.

Weiterhin zeigt sich die Bearbeitung von Epoxidharz insbesondere hinsichtlich Aushärtezeiten als technisch aufwendiger als z.B. die Verwendung von Polyesterharz.

Das erfindungsgemäße Verbundwerkstoff-Profil mit den kennzeichnenden Merkmalen des Hauptanspruchs hat demgegenüber den Vorteil, daß das in Kastenrahmen-Bauweise aufgebaute Profil durch einen zusätzlichen Holz- oder Schaumstoffkern hohe Querkräfte aufnehmen kann. Hierdurch wird insbesondere ein Ausbeulen und somit eine Zerstörung des Profils bei hoher Biegebeanspruchung vermieden. Besonders vorteilhaft ist weiterhin die Verwendung von Hochfestfasern wie z.B. Kohlenstoffaser, die einen in Längsrichtung orientierten Faserverlauf aufweisen. Diese mehrfach übereinander angeordneten Hochfestfaserlagen können hohe Zugkräfte und damit auch Biegekräfte aufnehmen. Bei einer dreidimensionalen Formgebung der Profile erfordern derartige längsorientierte Hochfestfasern besondere Stützmaßnahmen, um ein Wegrutschen der Faser aus bestimmten Lagen zu vermeiden. Hierfür sieht die Erfindung eine Kunststoff-Matrix vor, bei welcher z.B. die längsorientierte Kohlenstoffaser in ein Faservlies aus z.B. Asbest eingebettet und gegen den Preßdruck beim Herstellungsverfahren geschützt ist. Die Vlies-Zwischenlagen zwischen den Hochfest-Fasersträngen verhindern ein Beschädigen durch Überkreuzen oder Abquetschen der Hochfestfasern und dienen gleichzeitig zum fertigungsgerechten Aufbau eines Vorformlings.

Der Schichtstoffaufbau des erfindungsgemäßen Profils besteht vorzugsweise aus Kohlenstoffaser als Hochfestfaser mit einem Kurzfaser-Vlies aus Asbestfasern der Klasse 3 oder 4. Anstelle der Asbestfaservliese können jedoch auch geeignete Vliese bzw. Gewebe aus anderen Fasern mit ausreichender Festigkeit und Steifigkeit eingesetzt werden.

Das erfindungsgemäße Verbundwerkstoff-Profil weist gegenüber bekannten Profilen ein außerordentlich günstiges Festigkeits-Gewichts-Verhältnis auf: Bei einem Gewicht von ~1,7 g pro cm wird im 3-Punkt-Biegeversuch bei 200 mm Auflageabstand eine Bruchlast von >2500 N erreicht. Dabei weist das erfindungsgemäße Profil eine mit Holz vergleichbare Dämpfung auf.

Durch die in den Unteransprüchen aufgeführten Maßnahmen ist eine vorteilhafte Weiterbildung und Verbesserung des im Hauptanspruch angegebenen Verbundwerkstoff-Profils möglich.

Besonders vorteilhaft ist die Kombination der Verwendung einer Faservlieslage, insbesondere aus Asbest mit einer längsorientierten Hochfestfaserlage aus Kohlenstoffaser oder Aramid in einer duroplastischen Kunststoff-Matrix aus ungesättigtem Polyesterharz. In diese Schichtpreßstoffe ist erfindungsgemäß ein die Querkräfte aufnehmender Holz- oder Schaumstoffkern eingebettet, wobei ein rechteckiger Querschnitt des Kerns einerseits besonders hohe Querkräfte in Längsrichtung des Kernquerschnitts (Richtung der längeren Seite des Kernquerschnitts) aufnehmen, andererseits besonders leicht ausgeführt werden kann.

Die Erfindung sieht weiterhin vor, das erfindungsgemäße Profil als Tennisschläger-Profilrahmen zu verwenden. Durch das außerordentlich günstige Festigkeits-Gewichst-Verhältnis eignet sich das Profil hervorragend zur Herstellung eines Tennisschlägers in größerer Rahmenausführung.

Im Tennissport ist zur Zeit ein eindeutiger Trend in Richtung größerer Schlagflächen und damit verbundenen größeren Sweet spot erkennbar. Bei der Herstellung größerer Rahmen ergeben sich jedoch erhebliche Schwierigkeiten hinsichtlich der Festigkeits- und Gewichtsverhältnisse der Profile. Hierfür stellt das erfindungsgemäße Verbundwerkstoff-Profil einen optimalen Kompromiß zwischen einem preisgünstigen Tennisschläger mit großer Schlagfläche bei geringem Schlaggewicht dar. Bei der Herstellung des Tennisschlägers in üblicher Schichtpreßstoff-Technologie wird eine preisgünstige Herstellung des erfindungsgemäßen Profils gewährleistet, Bei der Verwendung des erfindungsgemäßen Profils als Tennisschläger zeichnet sich dieses weiterhin durch eine hohe, mit Holz vergleichbare Dämpfung aus.

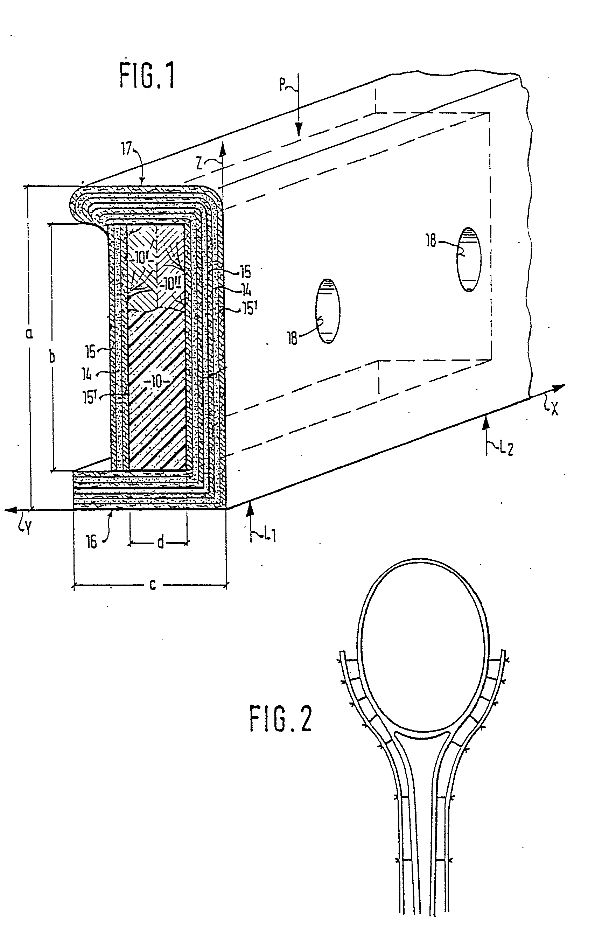

Ein Ausführungsbeispiel der Erfindung ist in der Zeichnung dargestellt und in der nachfolgenden Beschreibung unter Angabe weiterer Vorteile näher erläutert. Fig. 1 zeigt einen Schnitt durch das erfindungsgemäße Verbundwerkstoff-Profil in Kastenrahmen-Bauweise mit Kern, Fig. 2 eine schematische Darstellung eines aus dem erfindungsgemäßen Profil hergestellten Tennisschläger-rähmens in einer Einspannvorrichtung.

In der Fig. 1 ist ein Verbundwerkstoff-Profil in Kastenrahmen-Bauweise mit folgendem Aufbau dargestellt: In der Mitte des Profils ist ein Holzoder Schaumstoffkern 10, angeordnet, der vornehmlich die Querkräfte des bei Biegung beanspruchten Profils aufnehmen soll. Hierfür sind in der Fig. 1 schematisch die Krafteinleitungspunkte durch die Lagerungen $L_1$, $L_2$ sowie der Kraft P dargestellt. Der rechteckförmige Kern 10 wird mit seiner Längsseite in Richtung Krafteinwirkung zur Erhöhung des Biegemoments angeordnet. Bei Verwendung eines Kunststoffkerns, insbesondere Schaumstoffkerns, wird eine Dichte von $\rho=0,5$ g/cm³, bei einem Holzkern $\rho=0,6$ g/cm³ verwendet. Ein Holzkern kann selbst wieder aus Holzschichten (z.B. Sperrholz) 10', 10'' bestehen.

Um den Kern 10 sind in Kastenrahmen-Bauweise ein oder mehrere Schichtstofflagen angeordnet. Jede Schichtstofflage besteht dabei aus einer zwischen Faservlieslagen 15, 15' eingebetteten Hochfestfaserlage 14, die durch einen duroplastischen Tränkharz verbunden sind. Die in der Fig. 1 dargestellte äußere Schichtstofflage besteht aus einer Kohlenstoffaserlage 14, die in zwei Asbestvlieslagen 15, 15' eingebettet ist. Die Hochfestfaserlage, insbesondere Kohlenstoffaserlage 14 weist einen in Längsrichtung (X-Richtung in Fig. 1) orientierten Faserverlauf auf. Die Kohlenstoffaser weist in Orientierungsrichtung einen hohen E-Modul auf, d.h. sie ist zur Aufnahme von hohen Zugkräften bei Biegebeanspruchung geeignet.

Die dreidimensionale Formgebung des erfindungsgemäßen Verbundwerkstoff-Profils erfordert besondere Stützmaßnahmen der längsorientierten Kohlenstoffaser, um eine definierte Lage der Faser zu gewährleisten. Dies geschieht durch Faservlieslagen 15, 15', insbesondere Asbestvlieslagen, in welche die Kohlenstoffaser eingebettet ist. Beim Schichtpreßverfahren wird hierdurch eine Beschädigung der längsorientierten Kohlenstoffaser durch Überkreuzen und Abquetschen vermieden.

Zur weiteren Erhöhung der Biegelast pro Gewichtseinheit können zwei Schichtstofflagen U-förmig um den Holzkern 10 angeordnet werden, wobei die Schenkel 16, 17 der U-förmigen Schichtstofflagen mit den kurzen Seiten des im Querschnitt rechteckigen Kerns 10 verbunden sind. Die Schenkel 16, 17 des U-förmigen Profils können bei Verwendung des Profils als Tennisschläger-Rahmen über das Profil geringfügig hinausragen. In dieser Einbuchtung können dann die Saiten des bespannten Tennisschläger-Rahmens Auflage finden.

Neben den beiden U-förmig angeordneten Schichtstofflagen ist auf der vierten, gegenüberliegenden Seite des Holzkerns, im Inneren des U-förmig ausgebildeten Profils, eine weitere Schichtstofflage aufgebracht, die gleichfalls aus einer längsorientierten Kohlenstoffaserlage 14, die in zwei Asbestvlieslagen 15, 15' eingebettet ist besteht.

Das in der Fig. 1 dargestellte Ausführungsbeispiel ist im oberen Bereich etwas anders ausgestaltet: Der Holzkern ist als Zweischichtkern 10', 10'' ausgebildet und die Ecken des U-förmigen Kastenrahmens sind stark abgerundet.

Das in den Schichtstofflagen verwendete Asbestfaservlies mit einem Gewicht von ca. 300 g/m² bei einer Dicke von ca. 0,4 mm ungetränkt, ca. 0,55 mm mit Harzgetränkt, wird mit den Kohlenstoffaserlagen und dem Kern 10 mittels eines ungesättigten Polyesterharz verbunden, so daß sich das Gewicht nochmals etwa verdoppelt.

Die Herstellung des erfindungsgemäßen Profils in Schichtpreßstoff-Bauweise kann in folgenden Schritten erfolgen: Zur Herstellung der U-förmigen Schichtstofflagen werden vier Streifen Asbestfaserlagen und drei Streifen Kohlenstoffaserlagen geschichtet. Das U-förmige Profil wird bei ca. 60°C vorgeformt. Danach wird der Holzkern 10 sowie die weitere Schichtstofflage für die vierte Seite des Kerns, bestehend aus einer Kohlenstoffaserlage und zwei Asbestvlieslagen in das U-Profil eingelegt. Der so geschaffene Formkörper wird in eine Form eingelegt und bei Aushärttemperatur in einem zwei Minuten andauernden Preßvorgang gepreßt und ausgehärtet. Danach folgt ein Entformen und Entgraten.

Das so hergestellte Verbundwerkstoff-Profil zeichnet sich durch eine einfache und billige Herstellungsweise aus. Die gute Oberfläche erfordert wenig Nacharbeit.

Das erfindungsgemäße Profil kann u.a. vorzugsweise als Tennisschläger-Profil verwendet werden. Hierfür wird das Profil mit eingepreßten Bespann-Löchern 18 versehen, wobei die Bespannung in der U-förmigen Ausnehmung des Profils am Rahmen verlaufen kann. Das erfindungsgemäße Profil erlaubt eine hülsenfreie Bespannung, da einerseits ein Einreißen der Bohrungen durch den die Querkräfte aufnehmenden Holzkern vermieden wird, andererseits wird die Saite bei Verwendung von Kohlenstofffasern als Verstärkungsfaser nicht angeschnitten. Glasfaserverstärkte Kunststoffe haben sich diesbezüglich als ungeeignet erwiesen.

Bei Verwendung des erfindungsgemäßen Profils als Tennisschläger-Rahmen beträgt das Gewicht des Rahmens etwa 1,7 g/cm (Dichte $\rho \approx 1,35$ g/cm$^3$). Die Bruchlast bei einem Biegeversuch im 3-Punkt-Biegeversuch bei 200 mm Auflageabstand beträgt mehr als 2500 N. Die Proportionalitätsgrenze beträgt 2000 N, der E-Modul 25 000 N/mm$^2$; die Bruchgrenze liegt bei 300 N/mm$^2$. Dies stellt ein außerordentlich günstiges Verhältnis zwischen Festigkeit und Gewicht dar.

Bei der Herstellung des in der Fig. 1 dargestellten Profils als Tennisschläger-Profil weist die mit Y bezeichnete Richtung des Profils (Öffnung des U-förmigen Profils) zur Schlägeraußenseite. Bei der Herstellung des erfindungsgemäßen Profils in Schichtpreßstoff-Bauweise wird ein ebener Formkörper in die für einen Tennisschläger typische Form gebracht (siehe Fig. 2). Folgende in der Fig. 1 bezeichneten Maße haben sich als günstig erwiesen: a=17 mm, b=13 mm, c=8 mm, d=3 mm.

## Patentansprüche

1. Verbundwerkstoffprofil für hohe Zug- und Biegebanspruchung, bei dem um einen druckfesten Kern (10) mit einem duroplastischen Harz imprägnierte Hochfestfasern angeordnet sind, dadurch gekennzeichnet, daß die Hochfestfasern als wenigstens eine zwischen zwei Faservlieslagen (15, 15') eingebettete Hochfestfaserlage (14) mit in Längsrichtung des Verbundwerkstoffprofils orientiertem Faserverlauf aufgebracht sind.

2. Verbundwerkstoff-Profil nach Anspruch 1, dadurch gekennzeichnet, daß die Faservlieslage (15, 15') insbesondere aus Asbest, wobei Kurzfasern der Klasse 3—4 Verwendung finden, Glas, Polyester oder Polyamid besteht.

3. Verbundwerkstoff-Profil nach Anspruch 1, dadurch gekennzeichnet, daß die Hochfestfaserlage (14) aus Kohlenstoff-faser oder Aramidfaser besteht.

4. Verbundwerkstoff-Profil nach Anspruch 1, dadurch gekennzeichnet, daß als Imprägnierung duroplastische Harze wie ungesättigtes Polyesterharz, Phenolharz, Epoxidharz oder Triazinharz Verwendung finden.

5. Verbundwerkstoff-Profil nach einem oder mehreren der vorhergehenden Ansprüche, dadurch gekennzeichnet, daß um einen im Querschnitt rechteckigen Holz- oder Schaumstoffkern

(10) vier Asbestfaservlieslagen (15, 15') und drei darin eingebettete Kohlenstoffaserlagen (14) angeordnet sind.

6. Verbundwerkstoff-Profil nach Anspruch 5, dadurch gekennzeichnet, daß die Faserlagen U-förmig mit dem im Querschnitt rechteckigen Holz- oder Schaumstoffkern (10) verbunden sind und daß eine weitere zwischen zwei Faservlieslagen eingebettete Hochfestfaserlage mit der vierten Seite des Kerns (10) verbunden ist.

7. Verbundwerkstoff-Profil nach Anspruch 6 dadurch gekennzeichnet, daß die Schenkel (16, 17) der U-förmigen Faserlagen mit den kurzen Seiten des im Querschnitt rechteckigen Kerns (10) verbunden sind und daß die Schenkel (16, 17) über die Faserlagen auf der vierten Seite des kerns (10) hinausragen.

8. Verbundwerkstoff-Profil nach einem oder mehreren der vorhergehenden Ansprüche, dadurch gekennzeichnet, daß der Holzkern (10) aus mehreren Schichten (10', 10'') besteht.

9. Verbundwerkstoff-Profil nach einem oder mehreren der Ansprüche 1 bis 6, dadurch gekennzeichnet, daß der Kern (10) aus einem Schaumstoff mit einer Dichte $\rho \geq 0,5$ g/cm$^3$ oder aus Holz mit einer Dichte von $\rho \geq 0,6$ g/cm$^3$ besteht.

10. Verwendung eines Verbundwerkstoff-Profils nach einem oder mehreren der vorhergehenden Ansprüche 1—9 als Tennisschläger-Profilrahmen.

## Revendications

1. Profilé en matériau composite, prévu pour de hautes contraintes de traction et flexion, constitué d'un noyau (10) résistant à la pression, enrobé de fibres ultra-résistantes et imprégnées de résine thermodurcissable, caractérisé par le fait que les fibres ultra-résistantes forment au moins une couche (14) enrobée de deux nappes de voile de fibres (15, 15') et dont le fibrage est orienté dans le sens longitudinal du profilé en matériau composite.

2. Profilé en matériau composite suivant spécification 1, caractérisé par le fait que les nappes de voile de fibres (15, 15') sont surtout constituées d'amiante de verre, de polyester ou de polyamide, et par l'utilisation de fibres courtes des catégories 3 et 4.

3. Profilé en matériau composite suivant spécification 1, caractérisé par le fait que la couche de fibres ultra-résistantes (14) est constituée de fibres de carbone ou en aramide.

4. Profilé en matériau composite suivant spécification 1, caractérisé par le fait que des résines thermodurcissables, p. ex. résine de polyester non saturé, résine de phénol, résine époxyde ou résine de triazine, sont utilisées pour l'imprégnation.

5. Profilé en matériau composite suivant une ou plusieurs des spécitions précédentes, caractérisé par le fait qu'un noyau en bois ou en plastique alvéolaire (10), de section rectangulaire, est enveloppé de quatre nappes de voile de fibres d'amiante (15, 15') qui enrobent trois couches de fibres de carbone (14).

6. Profilé en matériau composite suivant spécification 5, caractérisé par le fait que les couches de fibres sont reliées en forme de U au noyau en bois ou en plastique alvéolaire (10), de section rectangulaire, et qu'une autre couche de fibres ultra-résistantes, enrobée de deux nappes de voile de fibres, est solidaire du quatrième côté du noyau (10).

7. Profilé en matériau composite suivant spécification 6, caractérisé par le fait que les branches (16, 17) des couches de fibres en forme de U sont reliées aux côtés courts du noyau (10) de section rectangulaire, et que les branches (16, 17) dépassent des couches de fibres sur le quatrième côté du noyau (10).

8. Profilé en matériau composite suivant une ou plusieurs des spécifications précédentes, caractérisé par le fait que le noyau en bois (10) est constitué de plusieurs couches (10', 10'').

9. Profilé en matériau composite suivant une ou plusieurs des spécifications 1 à 6, caractérisé par le fait que le noyau (10) est réalisé en plastique alvéolaire de masse volumique $\rho \geq 0{,}5$ g/cm³ ou en bois de masse volumique $\rho \geq 0{,}6$ g/m³.

10. Utilisation d'un profilé en matériau composite suivant une ou plusieurs des spécifications 1 à 9 précédentes pour obtenir un cadre-profilé pour raquette de tennis.

**Claims**

1. Profile made of composite material for high tensile or bending load comprising a core (10) with high compression strength and fibers impregnated with thermoset resin being arranged around the said core characterized in that at least one layer of high strength fibres is embedded between two layers of fibre fleeces (15, 15') and that the fibres are aligned along the longitudinal axis of the composite material.

2. Profile of a composite material according to claim 1 characterized in that the layer of the fibre fleece (15, 15') consists of short fibres especially of asbestos, glass, polyester or polyamid with a length according to class 3—4.

3. Profile of a composite material according to claim 1 characterized in that the layer of high tensile fibres (14) consists of carbon or aramid fibres.

4. Profile of a composite material according to claim 1 characterized in that the impregnation consists of a thermoset resin i.e. polyester resin, phenolic resin, epoxy resin or triazin resin.

5. Profile of a composite material according to one or more of the claims mentioned above characterized in that there are around a wooden or foam core (10) with a rectangular cross-section four layers of asbestos fibres (15, 15') and embedded within three layers of carbon fibres (14).

6. Profile of a composite material according to claim 5, characterized in that the fibre layers are arranged on the wooden or foam core (10) like an U and that another layer of high strength fibres embedded between two layers of fibre fleeces is fixed on the fourth side of the core (10).

7. Profile of a composite material according to claim 6 characterized in that the legs (16, 17) of the U-shaped layers of fibres are fixed on the short sides of the core (10) with rectangular cross-section and that the legs (16, 17) stretch out beyond the layers of fibres on the fourth side of the core.

8. Profile of a composite material according to one or more of the claims mentioned above characterized in that the wooden core (10) consists of several layers (10', 10'').

9. Profile of a composite material according to one or more of the claims 1—6 mentioned above characterized in that the core (10) consists of a foam with a density of >0.5 g/cm³ or of a wood with a density >0.6 g/cm³.

10. Application of a profile consisting of a composite material according to one or more of the claims 1—9 mentioned above for a tennis racket.

FIG.1

FIG.2